# EUROPÄISCHE PATENTANMELDUNG

(11) **EP 3 401 271 A1**
(43) Veröffentlichungstag der Anmeldung: **14.11.2018**
(21) Anmeldenummer: 18169043.9
(22) Anmeldetag: 24.04.2018
(51) Int. Cl.: B66F 9/22, B66F 17/00, F15B 1/02, B66F 11/00, B66F 7/04, B66F 7/16

(54) **VARIABLER EINSTELLBARER STÖRFALLDÄMPFER FÜR EIN HUBWERK UND HUBWERK**

(30) Priorität: 12.05.2017 DE 102017208029
(71) Anmelder: Robert Bosch GmbH, 70442 Stuttgart (DE)
(72) Erfinder: Grus, Daniel, 97737 Gemuenden (DE); Weiglein, Gunther, 97225 Zellingen (DE)
(74) Vertreter: Thürer, Andreas

(57) **Zusammenfassung**

Offenbart ist ein variabel einstellbar Störfalldämpfer vorzugsweise für Hubwerke mit einem Dämpfungszylinder (1), der sich an einem Gasdruckbereich und an einem damit in Reihe geschalteten Fluiddruckbereich abstützt, wobei eine Vorspannung des Störfalldämpfers dadurch einstellbar ist, dass der Fluiddruckbereich über eine Ventilanordnung mit zusätzlichen Fluid befüllbar ist, und dass über die Ventilanordnung aus dem Fluiddruckbereich abgelassen werden kann. Die Höhe der Vorspannung des Zylinders ist jeweils abhängig von der veränderlichen äußeren Last und optional von der Geschwindigkeit.

## Beschreibung

Die Erfindung betrifft einen variabel einstellbaren Störfalldämpfer vorzugsweise für ein Hubwerk gemäß dem Oberbegriff des Patentanspruchs 1 und ein Hubwerk mit einem derartigen Störfalldämpfer.

Gattungsgemäße Hubwerke werden zum Heben und Senken von Kulissen, Prospekten oder sogar von Schauspielern in der Bühnentechnik genutzt. Im Normalbetrieb entstehen am Hubwerk statische und dynamische Kräfte (Beschleunigungskräfte).Bei einem Not-Halt der Last wirkt dem gegenüber eine deutlich höhere Belastung auf das Hubwerk und damit auch auf die Last, als im Normalbetrieb. Die Kräfte, welche beim Not-Halt entstehen, sind ein zusätzliches Auslegekriterium für alle Bauteile, welche sich im sicherheitsrelevanten Bereich befinden. Der rechnerische Nachweis für diese Bauteile muss zusätzlich zur Belastung im Normalbetrieb auch für die Belastungen im Störfall Not-Halt durchgeführt werden. Ziel der Erfindung ist es ein System zu entwickeln, dessen Belastungen bei Not-Halt im Störfall maximal der doppelten Nennbelastung entspricht oder dass die Verzögerungen einen bestimmten Wert nicht überschreitet.

In der Druckschrift DE 10 2004 205 250 A1 sind verschiedene Hubwerke und insbesondere ein Störfalldämpfer für derartige Hubwerke gezeigt. Der Störfalldämpfer dämpft die abrupte Störfall-Bremsung. Der gezeigte Störfalldämpfer weist einen Differenzialzylinder auf, an dessen Kolbenstange ein Bauteil des Hubwerks derart gekoppelt wird, dass eine ziehende Last an den Differenzialzylinder übertragen wird. Der Ringraum des Differenzialzylinders ist mit einem Blasenspeicher verbunden. Der Störfalldämpfer ist derart ausgelegt, dass im Normalbetrieb des Hubwerks, wenn die Last lediglich eine normale äußere Kraft bewirkt ist, sich im Blasenspeicher kein Hydraulikmedium befindet und die Gasblase innen anliegt. Wenn das Hubwerk wegen eines Störfalls bremsen muss, wird die Kolbenstange des Differenzialzylinders durch die erhöhte äußere Kraft der Bremslast ausgezogen und der Blasenspeicher übergangsweise mit Hydraulikmedium gefüllt.

Nachteilig an derartigen Störfalldämpfern ist, dass sie nicht automatisch an unterschiedliche Bremsbelastungen und den daraus resultierenden äußeren Kräften im Störfall angepasst werden können.

Dem gegenüber liegt der Erfindung die Aufgabe zu Grunde, einen Störfalldämpfer für ein Hubwerk und ein entsprechendes Hubwerk zu schaffen, wobei der Störfalldämpfer einfach an verschiedene äußere Kräfte anpassbar ist.

Diese Aufgabe wird gelöst durch einen Störfalldämpfer mit den Merkmalen des Patentanspruchs 1 und durch ein Hubwerk mit den Merkmalen des Patentanspruchs 16.

Der beanspruchte Störfalldämpfer für Hubwerke hat einen Dämpfungszylinder, der ein Zylindergehäuse mit einem Zylinderkolben und eine daran befestigte Kolbenstange aufweist. Der Dämpfungszylinder hat an seinem Zylindergehäuse und an einem äußeren Endabschnitt der Kolbenstange jeweils eine Kopplungsvorrichtung für die beidseitige mechanische Anbindung des Dämpfungszylinders. In einem Normalbetrieb des Hubwerkes unterhalb einer Nennbelastung (inkl. aller statischen und dynamischen Kräfte im Normalbetrieb) befindet sich der Zylinderkolben des Dämpfungszylinders immer auf seiner Normalbetriebsposition. Diese kann von einem mechanischen Anschlag definiert sein. Der Dämpfungszylinder muss immer gegenüber der äußeren Kraft im Normalbetrieb über ein Kraftgleichgewicht oder bei der Lösung mit dem Anschlag vorzugsweise einen Kraftüberschuss verfügen, da sich ansonsten die Bewegungskontinuität der Last verschlechtert. Der einzustellende Druck innerhalb des Dämpfungszylinders errechnet sich in aus der äußeren Kraft (einschließlich aller statischen und dynamischen Kräfte im Normalbetrieb) und bei der Lösung mit dem Anschlag vorzugsweise einem Kraftzuschlag, sowie der Fläche des Zylinderkolbens, welche mit Druck beaufschlagt wird. Bei einem Störfall des Hubwerkes wird dem an einer der Kopplungsvorrichtungen befestigten Bauteil des Hubwerks über den Störfalldämpfer zusätzlich temporär Weg gegeben, und somit wird die Störfallbelastung gedämpft.

Der Störfalldämpfer weist dazu einen ersten Fluiddruckbereich und einen Gasdruckbereich auf, die durch ein erstes Trennelement voneinander getrennt sind. Die beiden Druckbereiche sind in Reihe geschaltet und vorzugsweise gemeinsam von dem Zylinderkolben spannbar. Erfindungsgemäß ist der erste Fluiddruckbereich bei einer Erhöhung der äußeren Last im Normalbetrieb über eine Ventilanordnung mit einer Druckquelle und bei einer Verringerung der äußeren Last im Normalbetrieb mit einer Druckmittelsenke, z.B. einem Tank, verbindbar. Damit kann im Normalbetrieb der Zylinderdruck an die verschiedenen äußeren Lasten angepasst werden, so dass im Störfall die Störfallbelastung durch die entgegenwirkende Dämpfungswirkung des Störfalldämpfers auf eine begrenzte Verzögerung ermöglicht wird.

Somit erfolgt die Anpassung des Zylinderdrucks des erfindungsgemäßen Störfalldämpfers im Normalbetrieb. Bei einer bevorzugten Ausgestaltung erfolgt die Anpassung des Zylinderdrucks bei ruhender, rein statischer Belastung, so dass die äußere Last lediglich die ruhende Last ist. Ein Kraftzuschlag für Normal-Beschleunigungen und Normal-Verzögerungen, bei denen der Dämpfungszylinder sich ebenfalls noch nicht bewegen soll, kann rechnerisch zur Lastkraft der ruhenden Last hinzuaddiert werden.

Weitere vorteilhafte Ausgestaltungen der Erfindung sind in den abhängigen Patentansprüchen beschrieben.

Bei einer ersten Ausgestaltung der Ventilanordnung hat diese ein Schaltventil mit einem Ventilkolben, der in einer Mittelstellung die Druckmittelquelle gegenüber dem ersten Fluidbereich absperrt. In einer ersten Schaltstellung wird die Druckmittelquelle mit dem ersten Fluidbereich verbunden. In einer zweiten Schaltstellung wird der erste Fluidbereich mit der Druckmittelsenke verbunden. Vorzugsweise ist die Mittelstellung des Ventilkörpers unterstützend federzentriert.

Bei einer zweiten Ausgestaltung der Ventilanordnung weist diese ein stetig verstellbares Ventil auf.

Ergänzend kann die Ventilanordnung in Abhängigkeit von einer Geschwindigkeit der Last z. B. an dem Hubwerk verstellbar sein.

Vorzugsweise ist die Ventilanordnung im Normalbetrieb in Abhängigkeit von einer Position des Dämpfungszylinders, also vorzugsweise seiner Kolbenstange verstellbar. Aus der Position kann auf die Vorspannung des Störfalldämpfers und damit auf die zu begrenzende Dämpfungskraft bzw. auf die zu begrenzende Verzögerung im Störfall geschlossen werden.

Dafür können gemäß einem ersten Ausführungsbeispiel an dem Dämpfungszylinder, also vorzugsweise an seiner Kolbenstange elektrische Positionsschalter vorgesehen sein, über die die Ventilanordnung verstellbar ist.

Dabei sind vorzugsweise zwei Positionsschalter entlang dem Dämpfungszylinder, also vorzugsweise entlang seiner Kolbenstange verteilt. Damit sind folgende drei Positionsbereiche ermittelbar: "Dämpfungszylinder zu weit ausgefahren" und "Dämpfungszylinder zu weit eingefahren" und die "Mittelposition" bei welchen der Fluidraum des Dämpfungszylinders und der Fluidraum der Versorgung durch das Schaltventil getrennt sind.

Gemäß einem zweiten Ausführungsbeispiel ist die Kopplungsvorrichtung am Ende der Kolbenstange des Dämpfungszylinders an den Ventilkolben der Ventilanordnung direkt mechanisch gekoppelt.

Es wird bevorzugt, wenn die Ventilanordnung ein in Reihe geschaltetes Sitzventil aufweist. Dieses wird analog zum Schaltventil oder stetig verstellbaren Ventil geöffnet, je nachdem ob eine Nachjustierung des Drucks des Störfalldämpfers erforderlich ist. Das Sitzventil dient dazu, den Fluiddruckbereich des Zylinders optimal in Richtung Versorgung abzudichten und so den eingestellten Druck des Zylinders über den benötigten Zeitraum fest einzuspannen.

Bei einem Ausführungsbeispiel erstreckt sich der erste Fluiddruckbereich zwischen dem Zylinderkolben und dem ersten Trennelement, das eine in einem Blasenspeicher aufgenommen Membran oder Blase ist. Damit umfasst der Fluiddruckbereich den mit Druck beaufschlagten Zylinderraum und den verrohrten Anteil zur Ventilanordnung und zum Blasenspeicher. Der Gasdruckbereich ist in dem Blasenspeicher aufgenommen.

Bei einem anderen Ausführungsbeispiel ist das erste Trennelement ein Trennkolben, der in dem Zylindergehäuse aufgenommen und geführt ist. Der Gasdruckbereich ist in dem Zylindergehäuse aufgenommen.

Vorzugsweise erstreckt sich der Gasdruckbereich zwischen dem Trennkolben und dem Zylinderkolben. Im Innern des Zylindergehäuses zwischen dem Trennkolben und den Zylinderkolben ist ein mechanischer Anschlag vorgesehen.

Bei einem weiteren Ausführungsbeispiel ist das erste Trennelement ein erster Trennkolben, der in einem ersten Kolbenspeicher aufgenommen und geführt ist.

Bei einer Weiterbildung sind ein zweiter Fluiddruckbereich und ein zweiter Kolbenspeicher mit einem zweiten Trennkolben vorgesehen. Der erste Fluiddruckbereich erstreckt sich zwischen der Ventilanordnung und dem ersten Trennkolben, der zweite Fluiddruckbereich erstreckt sich zwischen dem zweiten Trennkolben und dem Zylinderkolben, und der Gasdruckbereich erstreckt sich zwischen den beiden Trennkolben der beiden Kolbenspeicher. Damit ist der Gasdruckbereich zwischen den beiden Fluiddruckbereichen eingespannt. Damit stützt sich der Zylinderkolben an dem zweiten Fluiddruckbereich ab, der sich an dem zweiten Trennkolben abstützt, der sich an dem Gasdruckbereich abstützt, der sich an dem ersten Trennkolben abstützt, der sich an dem mit der Ventilanordnung verbundenen ersten Fluiddruckbereich abstützt.

Der Dämpfungszylinder kann ein Differenzialzylinder sein, der gemäß einer ersten Ausführungsform als Zugzylinder ausgestaltet ist, der im Störfall infolge der höheren äußeren Last auf den Dämpfungszylinder ausfährt. In diesem Fall wird das Fluid des Ringraumes des Dämpfungszylinders während des Störfalles temporär in Richtung Gasdruckbereich des Speichers verschoben. Nach Absinken der äußeren Last auf den Dämpfungszylinder schiebt der Gasdruck des Speichers das Fluid wieder in Richtung Ringraum des Dämpfungszylinders zurück, und dieser fährt wieder auf seine ursprüngliche Position ein.

Gemäß einer zweiten Ausführungsform ist der Differenzialzylinder als ein auf Druck belasteter Dämpfer ausgestaltet, der im Störfall durch die höhere äußere Last einfährt. In diesem Fall wird das Fluid des Kolbenraums während des Störfalles temporär in Richtung Gasdruckbereich des Speichers verschoben. Nach Absinken der äußeren Last auf den Dämpfungszylinder schiebt der Gasdruck des Speichers das Fluid wieder in Richtung Kolbenraum des Dämpfungszylinders zurück, und dieser fährt wieder auf seine ursprüngliche Position aus.

Vorzugsweise sorgt eine in Reihe geschaltete Drossel oder eine Düse für den sanften Druckaufbau und -abbau im Dämpfungszylinder des Störfalldämpfers bei der Nachstellung des Drucks.

Das erfindungsgemäße Hubwerk hat das Bauteil, an dem eine äußere Last wirkt. Das Bauteil wird über eine der beiden Kopplungsvorrichtungen des vorbeschriebenen Störfalldämpfers im Normalbetrieb ortsfest gehalten, und im Störfall über den Störfalldämpfer gedämpft bewegt.

Mehrere Ausführungsbeispiele eines erfindungsgemäßen Störfalldämpfers für Hubwerke sind in den Zeichnungen dargestellt.

Es zeigen
Figur 1 einen Schaltplan eines ersten Ausführungsbeispiels eines erfindungsgemäßen Störfalldämpfers in optimaler Mittelstellung,
Figur 2 Teile des ersten Ausführungsbeispiels in von der optimalen Mittelstellung abweichenden Stellungen,
Figur 3 einen Schaltplan eines zweiten Ausführungsbeispiels eines erfindungsgemäßen Störfalldämpfers in optimaler Mittelstellung,
Figur 4 einen Schaltplan eines dritten Ausführungsbeispiels eines erfindungsgemäßen Störfalldämpfers,
Figur 5 einen Schaltplan eines vierten Ausführungsbeispiels eines erfindungsgemäßen Störfalldämpfers,
Figur 6 einen Schaltplan eines fünften Ausführungsbeispiels eines erfindungsgemäßen Störfalldämpfers,
Figur 7 einen Schaltplan eines sechsten Ausführungsbeispiels eines erfindungsgemäßen Störfalldämpfers,
Figur 8 einen Schaltplan eines siebten Ausführungsbeispiels eines erfindungsgemäßen Störfalldämpfers mit zwei Fluiddruckbereichen und zwei Kolbenspeichern,
Figur 9 einen Schaltplan eines achten Ausführungsbeispiels eines erfindungsgemäßen Störfalldämpfers mit zwei Fluiddruckbereichen und zwei Kolbenspeichern und
Figur 10 einen Schaltplan eines neunten Ausführungsbeispiels eines erfindungsgemäßen Störfalldämpfers.

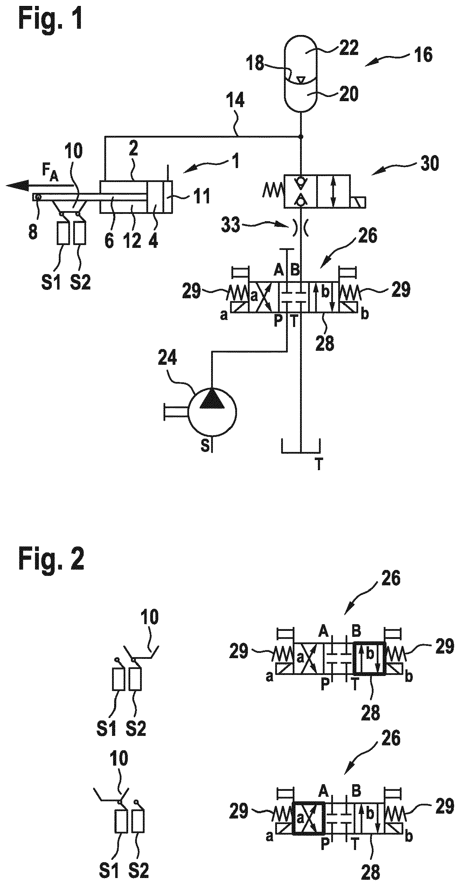

Figur 1 zeigt ein erstes Ausführungsbeispiel des erfindungsgemäßen Störfalldämpfers. Ein Differenzialzylinder 1 dient als Dämpfungszylinder. Er hat ein Zylindergehäuse 2, in dem ein Zylinderkolben 4 geführt ist. An dem Zylinderkolben 4 ist eine Kolbenstange 6 befestigt, an deren vom Zylinderkolben 4 beabstandeten Endabschnitt eine Kopplungsvorrichtung 8 vorgesehen ist. Daran kann ein Bauteil eines nicht näher gezeigten Hubwerks gekoppelt werden. In einem Normalbetrieb des Hubwerkes überträgt das Bauteil an die Kolbenstange 6 des Dämpfungszylinders 1 eine äußere Kraft F_{A}. Die äußere Kraft F_{A} im Normalbetrieb setzt sich aus einen statischen und einem dynamischen Anteil zusammen.

Die Kolbenstange 6 ist in Figur 1 in einer mittleren Sollposition gezeigt, wobei sich das Attribut "mittlere" nicht auf den Hubweg der Kolbenstange 6 bezieht, sondern auf beidseitige mögliche Abweichungen von dieser mittleren Sollposition. Die mittlere Sollposition wird dadurch automatisch identifiziert, dass eine an der Kolbenstange 6 befestigte Fahne oder Nocke 10 zwei Positionsschalter S1, S2, genauer gesagt einen bauteilseitigen Positionsschalter S1 und einen in Verfahrrichtung dazu beabstandeten zylinderseitigen Positionsschalter S2, gleichzeitig betätigt.

Der Zylinderkolben 4 trennt einen Kolbenraum 11 von einem Ringraum 12 des Differenzialzylinders 1. Der Ringraum 12 ist über eine Leitung 14 einerseits mit einem als Blasenspeicher ausgeführtem hydraulischen Speicher 16 und andererseits mit einer Ventilanordnung verbunden. Der Blasenspeicher 16 ist über eine Blase 18 einerseits in einen Fluiddruckraum 20 und andererseits in einen Gasdruckraum 22 unterteilt. Damit bildet der Gasdruckraum 22 einen Gasdruckbereich, während der Fluiddruckraum 20 mit dem Ringraum 12 und der Leitung 14 einen Fluiddruckbereich bilden. Die Blase 18 bildet ein erstes Trennelement.

Über die Ventilanordnung kann der Fluiddruckbereich zur Druckerhöhung mit einer Pumpe 24 oder zu Verringerung des Drucks mit einem Tank T verbunden werden. Dies dient erfindungsgemäß der Einstellung der Vorspannung des Störfalldämpfers. Beide Verbindungen werden über ein Schaltventil 26 der Ventilanordnung gesteuert, dessen beweglicher Ventilkolben 28 den Fluiddruckbereich absperren kann, um so die eingestellte Dämpfungskraft des Störfalldämpfers zu (er)halten. Dabei ist der Ventilkolben 28 in der in Figur 1 gezeigten mittleren Stellung durch zwei Federn 29 vorgespannt zentriert.

Zwischen dem Schaltventil 26 und der Leitung 14 ist in Reihe zu dem Schaltventil 26 ein Sitzventil 30 vorgesehen, das der Ventilanordnung zugeordnet ist. In der in Figur 1 gezeigten durch eine Feder vorgespannten Grundstellung dichtet das Sitzventil 30 den Fluiddruckbereich zusätzlich im unbestromten Zustand zum geschlossenen Schaltventil 26 ab.

Figur 2 zeigt im oberen Bereich die automatische Reaktion des ersten Ausführungsbeispiels des erfindungsgemäßen Störfalldämpfers aus Figur 1 für den Fall, dass die äußere Kraft F_{A} im Normalbetrieb zu gering für die derzeitige Vorspannung des Dämpfungszylinders 1 ist. In diesem Fall ist die Kolbenstange 6 zusammen mit der daran befestigten Nocke 10 zu weit in den Dämpfungszylinder 1 eingefahren, so dass der bauteilseitige Positionsschalter S1 nicht mehr geschaltet ist. Dann wird der Ventilmagnet b bestromt, so dass der Ventilkolben 28 des Schaltventils 26 in die Schaltstellung b verschoben wird, womit der Fluiddruckbereich über das ebenfalls geöffnete Sitzventil 30 (vgl. Figur 1) und über den Arbeitsanschluss B des Schaltventils 26 zum Tank T entlastet wird. Damit kann die Kolbenstange 6 (vgl. Figur 1) ausfahren, bis über deren Nocke 10 auch der bauteilseitige Positionsschalter S1 wieder geschaltet wird. Dann werden beide Ventile 26, 30 der Ventilanordnung wieder geschlossen und die in Figur 1 gezeigte Stellung ist wieder erreicht.

Eine in Reihe geschaltete Drossel 33 oder eine Düse sorgt für den sanften Druckaufbau und -abbau im Dämpfungszylinder 1 des Störfalldämpfers 1 bei der Nachstellung des Drucks. Die Drossel 33 oder Düse ist zwischen der Ventilanordnung und dem hydraulischen Speicher 16 angeordnet.

Figur 2 zeigt im unteren Bereich die automatische Antwort des ersten Ausführungsbeispiels des erfindungsgemäßen Störfalldämpfers, wenn die äußere Kraft F_{A} im Normalbetrieb zu hoch für die derzeitige Vorspannung des Dämpfungszylinders 1 ist. Dadurch ist die Nocke 10 derart verfahren, dass der zylinderseitige Positionsschalter S2 nicht mehr geschaltet ist. Dann wird der Ventilmagnet a des Schaltventils 26 bestromt, so dass die Schaltstellung a des Ventilkolbens 28 erreicht wird. Damit wird die Pumpe 24 (vgl. Figur 1) über das ebenfalls geöffnete Sitzventil 30 mit dem Fluiddruckbereich verbunden, so dass der Vorspanndruck des Störfalldämpfers solange erhöht wird, bis die in Figur 1 gezeigte mittleren Sollposition wieder erreicht wird.

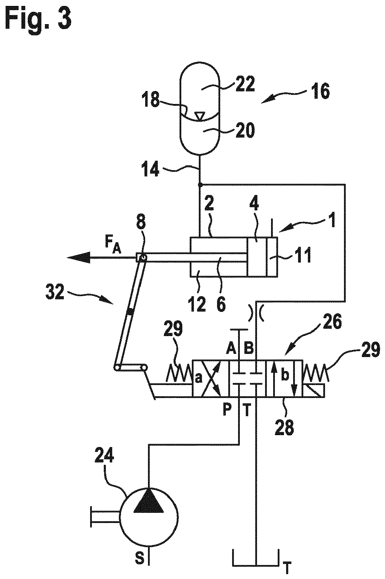

Figur 3 zeigt ein zweites Ausführungsbeispiel des erfindungsgemäßen Störfalldämpfers. Dabei ist der wesentliche Unterschied zum ersten Ausführungsbeispiel gemäß den Figuren 1 und 2 darin zu sehen, dass die Rückkopplung der Position der Kolbenstange 6 und damit der Kopplungsvorrichtung 8 für das zu dämpfende Bauteil an den Ventilkolben 28 des Schaltventils 26 nicht elektrisch, sondern mechanisch erfolgt. Dazu ist die Kolbenstange 6 über eine Hebelvorrichtung 32 an den Ventilkolben 28 mechanisch gekoppelt. Figur 3 zeigt die Kolbenstange 6 wieder in ihrer mittleren Sollposition, wobei über die Hebelvorrichtung 32 der Ventilkolben 28 in seiner mittleren Schaltstellung positioniert ist, so dass der Fluiddruckbereich abgesperrt ist, und die gegebene mittlere Sollposition der Kolbenstange 6 gehalten wird. Die in Reihe geschaltete Drossel 33 oder eine Düse sorgt für den sanften Druckaufbau und -abbau im Dämpfungszylinder 1 des Störfalldämpfers bei der Nachstellung des Drucks.

Der Ventilkolben 28 wird über die Hebelvorrichtung 32 in seine erste Schaltstellung a verschoben, wenn die Vorspannung des Störfalldämpfers zu gering ist, und in die Schaltstellung b verschoben, wenn die Vorspannung zu hoch ist.

Abweichend von der in Figur 3 gezeigten Darstellung kann auch das Sitzventil 30 aus Figur 1 beim zweiten Ausführungsbeispiel aus Figur 3 vorgesehen sein. Weiterhin können die beiden Federn 29 des Schaltventils 26 beim zweiten Ausführungsbeispiel entfallen, wenn die Genauigkeit der Positionierung des Ventilkörpers 28 über die Hebelvorrichtung 32 genau genug ist.

Bei den beiden ersten Ausführungsbeispielen gemäß den Figuren 1 bis 3 ist die optimale mittlere Sollposition des Zylinderkolbens 4 dadurch gekennzeichnet, dass sie einerseits in Richtung Ringraum 12 einen ausreichend langen Hub für den Störfall ermöglicht und andererseits in Richtung Kolbenraum 11 einen vergleichsweise kurzen Reaktionsweg bereithält, wenn die Vorspannung zu hoch bzw. die äußere Kraft F_{A} zu gering werden sollte.

Abweichend von den beiden ersten Ausführungsbeispielen kann der Zylinderkolben 4 des Dämpfungszylinders 1 im Normalbetrieb auch stets maximal eingefahren sein.

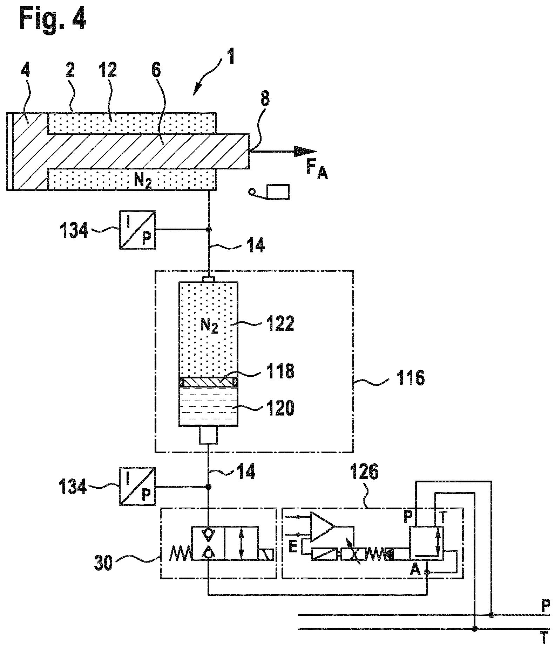

Figur 4 zeigt ein drittes Ausführungsbeispiel des erfindungsgemäßen Störfalldämpfers. Der prinzipielle Aufbau des Differenzialzylinders 1 ist mit dem des ersten Ausführungsbeispiels aus Figur 1 vergleichbar. Über die Leitung 14 ist an dem Ringraum 12 des Differenzialzylinders 1 statt dem Blasenspeicher der vorhergegangenen Ausführungsbeispiele ein (erster) Kolbenspeicher 116 angeschlossen. Sein Gasdruckraum 122 ist über die Leitung 14 mit dem Ringraum 12 des Differenzialzylinders 1 verbunden. Damit bilden der Ringraum 12 mit der Leitung 14 und dem Gasdruckraum 122 den Gasdruckbereich. Der Gasdruckraum 122 ist über einen ersten Trennkolben 118 von einem Fluiddruckraum 120 des Kolbenspeichers 116 getrennt. Damit bildet der erste Fluiddruckraum 120 des ersten Kolbenspeichers 116 mit der Leitung 14 den Fluiddruckbereich.

Der Fluiddruckraum 120 ist über einen Fluidanschluss, eine Leitung 14 und über das Sitzventil 30 mit einem Arbeitsanschluss A eines stetig verstellbaren Ventils 126 verbunden. Dieses ist als proportionales Druckreduzierventil 126 mit eingebauter Elektronik ausgeführt. Über dieses Ventil 126 wird sein Arbeitsanschluss A und damit der Fluiddruckbereich in Abhängigkeit eines Kraftmesssignals, das z.B. von einer nicht gezeigten Winde des Hubwerkes abgegriffen wird, entweder mit dem Pumpenanschluss P oder mit den Tankanschluss T verbunden.

An die Leitung 14 des Gasdruckbereichs und an die Leitung 14 des Fluiddruckbereichs ist jeweils ein Drucksensor 134 angeschlossen.

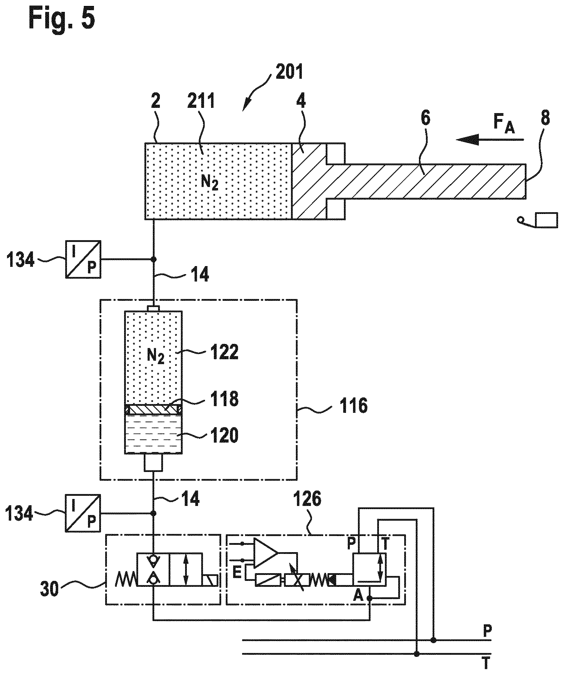

Figur 5 zeigt ein viertes Ausführungsbeispiel des erfindungsgemäßen Störfalldämpfers. Dabei ist der entscheidende Unterschied zum dritten Ausführungsbeispiel gemäß Figur 4 ist in dem Differenzialzylinder 201 zu sehen. Dieser ist als Druckzylinder ausgebildet, so dass der Kolbenraum 211 als Gasdruckraum dient. Damit ist wird beim vierten Ausführungsbeispiel gemäß Figur 5 der Gasdruckbereich vom Kolbenraum 211 des Differenzialzylinders 201 und weiterhin (wie beim dritten Ausführungsbeispiel gemäß Figur 4) von der Leitung 14 und dem Gasdruckraum 122 des Kolbenspeichers 116 gebildet.

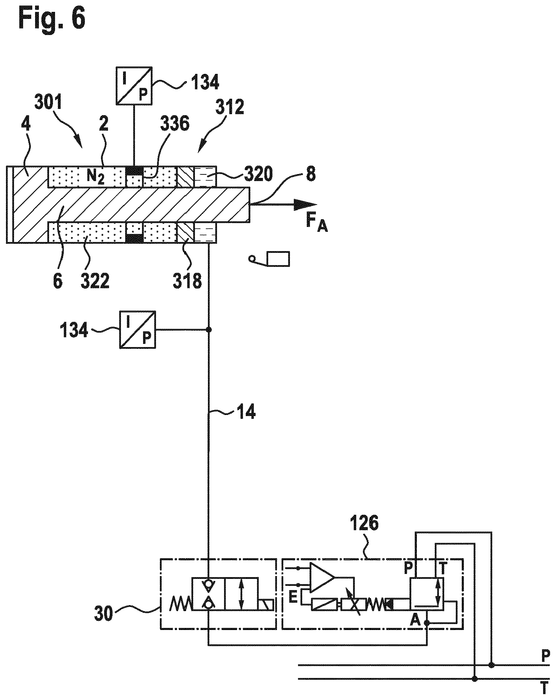

Figur 6 zeigt ein fünftes Ausführungsbeispiel des erfindungsgemäßen Störfalldämpfers. Während bei den ersten Ausführungsbeispielen gemäß den Figuren 1 bis 5 jeweilige von dem Differenzialzylinder 1; 201 getrennte hydraulische Speicher 16; 116 vorgesehen sind, sind beim fünften Ausführungsbeispiel gemäß Figur 6 der Fluiddruckbereich (abgesehen von der Leitung 14) und der Gasdruckbereich gemeinsam im Differenzialzylinder 301 aufgenommen. Dabei ist der Differenzialzylinder 301 als Zugzylinder ausgebildet, der also beim der Störfall-Bremsung ausfährt. Der Ringraum 312 des Differenzialzylinders 301 ist durch einen darin geführten ringförmigen Trennkolben 318 unterteilt. Zwischen dem Zylinderkolben 4 und dem Trennkolben 318 ist der Gasdruckraum 322 angeordnet, während in dem verbleibenden Teil des Ringraums 312 der Fluiddruckraum 320 angeordnet ist. Dieser ist über die Leitung 14 mit dem Sitzventil 30 und dem stetig verstellbaren Ventil 126 der Ventilanordnung verbunden.

Im Gasdruckraum 322 ist an der Innenfläche des Zylindergehäuses 2 ein mechanischer Anschlag 336 ausgebildet. Im Bereich des mechanischen Anschlags 336 ist der Drucksensor 134 an den Ringraum 312 angeschlossen, so dass dieser stets den Druck des Gasdruckraums 322 erfassen kann, unabhängig von der Stellung des Zylinderkolbens 4 und des Trennkolbens 318.

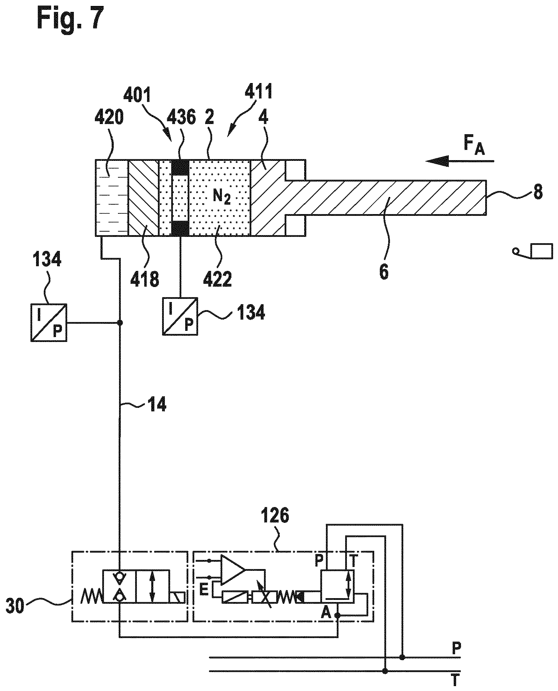

Figur 7 zeigt ein sechstes Ausführungsbeispiel des erfindungsgemäßen Störfalldämpfers, wobei der Unterschied zum fünften Ausführungsbeispiel gemäß Figur 6 darin zu sehen ist, dass der Differenzialzylinder 401 als Druckzylinder ausgestaltet ist, so dass die Integration der Druckräume im Innern des Zylindergehäuses 2 abweichend im Kolbenraum 411 erfolgt. Der Trennkolben 418 ist scheibenförmig ausgebildet und im Kolbenraum 411 beweglich. Zwischen ihm und dem Zylinderkolben 4 ist der Gasdruckraum 422 angeordnet, der bei diesem Ausführungsbeispiel den gesamten Gasdruckbereich bildet. An der vom Zylinderkolben 4 abgewandten Seite des Trennkolbens 418 ist der wesentliche Teil des Fluiddruckbereiches, genauer gesagt der Fluiddruckraum 420 angeordnet. Im Gasdruckraum 422 an der Innenfläche des Zylindergehäuses 2 ist der mechanische Anschlag 436 angeordnet und dort wird der Gasdruck durch den Drucksensor 134 erfasst.

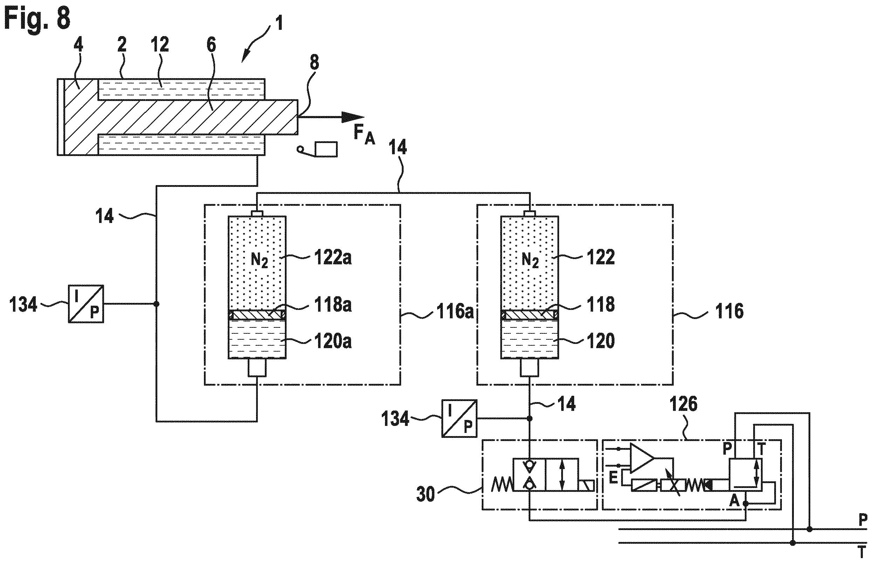

Figur 8 zeigt ein siebtes Ausführungsbeispiel des erfindungsgemäßen Störfalldämpfers, der verwandt mit dem dritten Ausführungsbeispiel aus Figur 4 ist. Genauer gesagt entsprechen der erste Kolbenspeicher 116, die Leitung 14 mit dem Drucksensor 134 und die Ventilanordnung mit dem Sitzventil 30 und dem stetig verstellbaren Ventil 126 denjenigen des dritten Ausführungsbeispiels aus Figur 4. Zwischen dem ersten Kolbenspeicher 116 und dem Ringraum des ebenfalls als Zugzylinder ausgestalteten Differenzialzylinders 1 ist ein weiterer zweiter Kolbenspeicher 116a in Reihe geschaltet. Dabei ist der zweite Gasdruckraum 122a über eine Leitung 14 mit dem ersten Gasdruckraum 122 des ersten Kolbenspeichers 116 verbunden, während der zweite Fluiddruckraum 120a des zweiten Kolbenspeichers 116a über eine Leitung 14 mit dem Ringraum 12 des Differenzialzylinders 1 verbunden ist. Damit ist der Ringraum 12 nicht wie in Figur 4 ein Gasdruckraum, sondern ein Fluiddruckraum. Somit bilden der zweite Fluiddruckraum 120a mit dem Ringraum 12 einen zweiten Fluiddruckbereich, so dass sich (ausgehend von der Ventilanordnung) eine Reihenschaltung aus dem ersten Fluiddruckbereich (insbesondere erster Fluiddruckraum 120), einem mittleren Gasdruckbereich (insbesondere die beiden Gasdruckräume 122, 122a) und einem zweiten Fluiddruckbereich (insbesondere zweiter Fluiddruckraum 120 und Ringraum 12) ergibt.

An jedem der beiden Fluiddruckbereiche ist ein Drucksensor 134 angeschlossen.

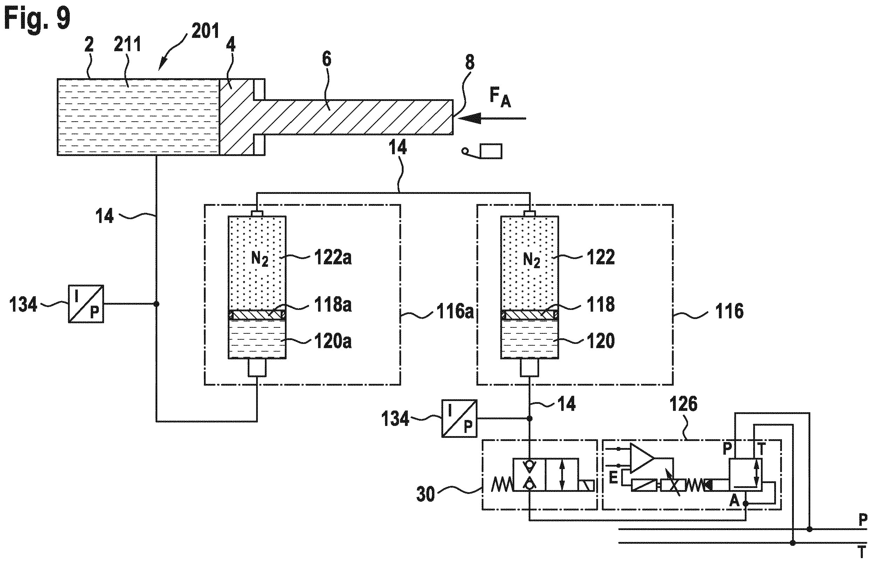

Figur 9 zeigt ein achtes Ausführungsbeispiel des erfindungsgemäßen Störfalldämpfers. Der Unterschied zum siebten Ausführungsbeispiel gemäß Figur 8 ist darin zu sehen, dass der Differenzialzylinder 201 als Druckzylinder ausgestaltet ist, so dass an den zweiten Fluiddruckraum 120a des zweiten Kolbenspeichers 116a abweichend vom siebten Ausführungsbeispiel gemäß Figur 8 der Kolbenraum 211 des Differenzialzylinders 201 angeschossen ist, so dass dieser dem zweiten Fluiddruckbereich zugeordnet ist.

Bei den Ausführungsbeispielen zwei bis acht gemäß den Figuren 4 bis 9 ist jeweils an dem den ersten Fluiddruckbereich bildenden ersten Fluiddruckraum 120 des ersten Kolbenspeichers 116 die Ventilanordnung angeschlossen. Über deren stetig verstellbares Ventil 126 wird der Systemdruck in Abhängigkeit eines nicht gezeigten Kraftsensors an die äußere Kraft F_{A} angepasst.

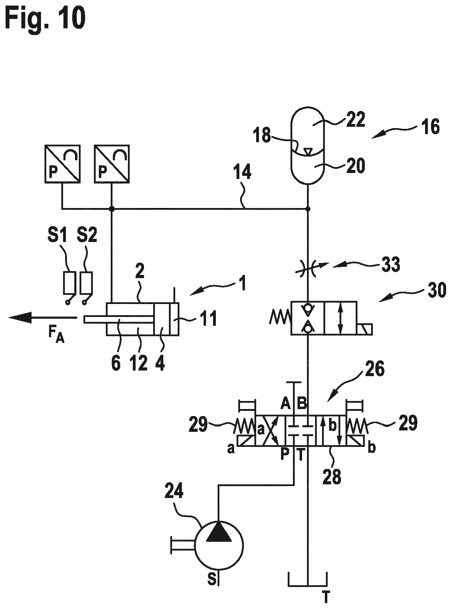

Figur 10 zeigt ein neuntes Ausführungsbeispiel des erfindungsgemäßen Störfalldämpfers, wobei die wesentlichen Unterschiede zum ersten Ausführungsbeispiel gemäß Figur 1 darin zu sehen sind, dass die Drossel 33 verstellbar ausgeführt ist. Weiterhin sind die beiden Positionssachalter S1, S2, über die die Ventilanordnung im Normalbetrieb des Störfalldämpfers verstellt wird, in direkter Wirkverbindung mit der Kolbenstange 6. Dies geschieht in Abhängigkeit vom IST-Wert der äußeren Kraft F_{A} im Normalbetrieb, welcher durch einen nicht dargestellten Sensor erfasst wird. Dieser IST-Wert F_{A} wird umgerechnet in einen SOLL-Druck. Er beinhaltet die statischen und dynamischen Kräfte sowie einen Kraftzuschlag wegen der Bewegungskontinuität. Durch die Ventilanordnung wird der Vorspanndruck im Dämpfungszylinder 1 und im angebauten hydraulischen Speicher 16 entsprechend SOLL-Druck angepasst. Der IST-Druck wird durch mindestens einen Druckmessumformer erfasst und gegengeprüft. Aus Sicherheitsgründen ist zur Überprüfung des IST-Drucks ein zweiter Druckmessumformer am Dämpfungszylinder 1 angebaut. Alternativ kann auch nur ein Druckmessumformer, welche SIL3-Zulassung hat, eingesetzt werden.

Des Weiteren sollte zur Überwachung des ausreichenden Zylinderhubes die ISTPosition des Zylinderkolbens 4 oder der Kolbenstange 6 im Normalbetrieb durch einen Sensor überwacht werden. Aus Sicherheitsgründen sollte auch dieser doppelt ausgeführt sein. Alternativ kann auch nur ein Sensor eingesetzt werden, wenn dieser SIL3-fähig ausgeführt ist.

Als ein weiterer Sensor sollte zusätzlich ein Sensor zur Überwachung der Funktionsfähigkeit der Dichtheit des hydraulischen Speichers 16 zwischen Fluiddruckbereich und Gasdruckbereich eingesetzt werden. Ergänzend können der Gasdruck und die Gastemperatur überwacht werden.

Falls eine dieser Überwachungen des Störfalldämpfers im Fahrbetrieb anspricht, soll durch den Antrieb das Hubwerk (beide nicht gezeigt) geregelt abgebremst und stillgesetzt werden. Der Betrieb darf erst nach Behebung des/der Fehler wieder aufgenommen werden.

Offenbart ist ein variabel verstellbarer Störfalldämpfer für Hubwerke mit einem Dämpfungszylinder, der sich an einem Gasdruckbereich und an einem damit in Reihe geschalteten Fluiddruckbereich abstützt, wobei eine Vorspannung des Störfalldämpfers dadurch einstellbar ist, dass der Fluiddruckbereich über eine Ventilanordnung mit zusätzlichen Fluid befüllbar ist, und dass über die Ventilanordnung aus dem Fluiddruckbereich abgelassen werden kann.

### Bezugszeichenliste

- 1; 101; 201; 301; 401: Dämpfungszylinder / Differenzialzylinder
- 2: Zylindergehäuse
- 4: Zylinderkolben
- 6: Kolbenstange
- 8: Kopplungsvorrichtung
- 10: Nocke
- 11; 211; 411: Kolbenraum
- 12; 312: Ringraum
- 14: Leitung
- 16: hydraulischer Speicher / Blasenspeicher
- 18: Blase
- 20: Fluiddruckraum
- 22: Gasdruckraum
- 24: Druckmittelquelle / Pumpe
- 26: Schaltventil
- 28: Ventilkolben
- 29: Feder
- 30: Sitzventil
- 32: Hebelvorrichtung
- 33: Drossel
- 116: erster hydraulischer Speicher / Kolbenspeicher
- 116a: zweiter hydraulischer Speicher / Kolbenspeicher
- 118: erster Trennkolben
- 118a: zweiter Trennkolben
- 120: erster Fluiddruckraum
- 120a: zweiter Fluiddruckraum
- 122: erster Gasdruckraum
- 122a: zweiter Gasdruckraum
- 126: stetig verstellbares Ventil
- 134: Drucksensor
- 318; 418: Trennkolben
- 320; 420: Fluiddruckraum
- 322; 422: Gasdruckraum
- 336; 436: Anschlag

- A: Arbeitsanschluss
- B: Arbeitsanschluss
- a: erste Schaltstellung / erster Ventilmagnet
- b: zweite Schaltstellung / zweiter Ventilmagnet
- F_{A}: äußere Kraft im Normalbetrieb / äußere Kraft im Störfall
- P: Pumpenanschluss
- S: Sauganschluss
- S1: bauteilseitiger Positionsschalter
- S2: zylinderseitiger Positionsschalter
- T: Druckmittelsenke / Tank / Tankanschluss

## Patentansprüche

1. Störfalldämpfer für ein Hubwerk mit einem Dämpfungszylinder (1), der ein Zylindergehäuse (2) und einen Zylinderkolben (4) und eine Kolbenstange (6) aufweist, und der an ein Bauteil des Hubwerks koppelbar ist, das bei einer äußeren Kräften (F_{A}) in einem Normalbetrieb des Hubwerkes über den Störfalldämpfer im Wesentlichen ortsfest oder ortsfest gehalten ist, und das bei einer äußeren Kraft (F_{A}) in einem Störfall des Hubwerkes, die größer ist als die äußere Kraft (F_{A}) im Normalbetrieb ist, gedämpft bewegbar ist, wobei der Störfalldämpfer einen Gasdruckbereich und einen ersten Fluiddruckbereich aufweist, die von einem ersten Trennelement getrennt sind, und die vorzugsweise gemeinsam von dem Zylinderkolben (4) spannbar sind, **dadurch gekennzeichnet, dass** der erste Fluiddruckbereich in Abhängigkeit von der äußeren Kraft (F_{A}) im Normalbetrieb über eine Ventilanordnung mit einer Druckmittelquelle (24) oder mit einer Druckmittelsenke (T) verbindbar ist.

2. Störfalldämpfer nach Anspruch 1, wobei die Ventilanordnung ein Schaltventil (26) mit einem Ventilkolben (28) hat, der in einer Mittelstellung eine Druckmittelquelle (P) gegenüber dem ersten Fluidbereich absperrt, und der in einer ersten Schaltstellung (a) die Druckmittelquelle (P) mit dem ersten Fluidbereich verbindet, und der in einer zweiten Schaltstellung (b) den ersten Fluidbereich mit der Druckmittelsenke (T) verbindet.

3. Störfalldämpfer nach eine der vorhergehenden Ansprüche, wobei die Ventilanordnung ein stetig verstellbares Ventil (126) aufweist.

4. Störfalldämpfer nach einen der vorhergehenden Ansprüche, wobei die Ventilanordnung in Abhängigkeit von einer Geschwindigkeit verstellbar ist.

5. Störfalldämpfer nach einem der vorhergehenden Ansprüche, wobei die Ventilanordnung im Normalbetrieb in Abhängigkeit von einer Position des Dämpfungszylinders (1) verstellbar ist.

6. Störfalldämpfer nach Anspruch 5, wobei an dem Dämpfungszylinder (1) elektrische Positionsschalter (S1, S2) vorgesehen sind, über die die Ventilanordnung verstellbar ist.

7. Störfalldämpfer nach den Ansprüchen 2 und 5, wobei der Dämpfungszylinder (1) mechanisch an den Ventilkolben (28) der Ventilanordnung gekoppelt ist.

8. Störfalldämpfer nach eine der vorhergehenden Ansprüche, wobei die Ventilanordnung ein Sitzventil (30) aufweist, das ebenfalls in Abhängigkeit von der äußeren Kraft (F_{A}) im Normalbetrieb schaltbar ist.

9. Störfalldämpfer nach einem der vorhergehenden Ansprüche, wobei der erste Fluiddruckbereich zwischen dem Zylinderkolben (4) und dem ersten Trennelement angeordnet ist, das eine in einem hydraulischen Speicher (16) aufgenommen Membran oder Blase (18) oder ein Kolben ist, wobei der Gasdruckbereich in dem hydraulischen Speicher (16) aufgenommen ist.

10. Störfalldämpfer nach einem der Ansprüche 1 bis 8, wobei das erste Trennelement ein Trennkolben (318; 418) ist, der in dem Zylindergehäuse (2) aufgenommen und geführt ist, in dem der Gasdruckbereich aufgenommen ist.

11. Störfalldämpfer nach Anspruch 10, wobei der Gasdruckbereich zwischen dem Trennkolben (318; 418) und dem Zylinderkolben (4) angeordnet ist, und wobei im Zylindergehäuse (2) zwischen dem Trennkolben (318; 418) und den Hauptkolben (4) ein mechanischer Anschlag (336; 436) vorgesehen ist.

12. Störfalldämpfer nach einem der Ansprüche 1 bis 8, wobei das erste Trennelement ein erster Trennkolben (118), eine Blase oder eine Membran ist, die in einem ersten hydraulischen Speicher (116) aufgenommen ist.

13. Störfalldämpfer nach Anspruch 12, wobei ein zweiter Fluiddruckbereich und ein zweiter hydraulischer Speicher (116a) mit einem zweiten Trennelement (118a) vorgesehen ist, und wobei der erste Fluiddruckbereich zwischen der Ventilanordnung und dem ersten Trennelement (118) angeordnet ist, und wobei der zweite Fluiddruckbereich zwischen dem zweiten Trennelement (118a) und dem Zylinderkolben (4) angeordnet ist, und wobei der Gasdruckbereich zwischen den beiden Trennelementen (118, 118a) der beiden hydraulischen Speichern (116, 116a) und damit zwischen den beiden Fluiddruckbereichen eingespannt ist.

14. Störfalldämpfer nach einem der vorhergehenden Ansprüche, wobei der Dämpfungszylinder ein Differenzialzylinder (1; 101; 201; 301; 401) ist, der als Zugdämpfer oder als Druckdämpfer ausgestaltet ist.

15. Störfalldämpfer nach einem der vorhergehenden Ansprüche, wobei eine Drossel (33) oder Düse im der Ventilanordnung in Reihe geschaltet ist.

16. Hubwerk mit einem Bauteil, das an einen Störfalldämpfer nach einem der vorhergehenden Ansprüche gekoppelt ist, wobei das Bauteil im Normalbetrieb über den Störfalldämpfer im Wesentlichen ortsfest gehalten oder ortsfest ist, und im Störfall über den Störfalldämpfer gedämpft bewegbar ist.
